# EUROPÄISCHE PATENTANMELDUNG

(11) **EP 4 485 741 A1**
(43) Veröffentlichungstag der Anmeldung: **01.01.2025**
(21) Anmeldenummer: 23182699.1
(22) Anmeldetag: 30.06.2023
(51) Int. Cl.: H02J 7/00, B25F 5/00

(54) **ENERGIESPEICHERSYSTEM FÜR EINE WERKZEUGMASCHINE, VERFAHREN ZUR ERMITTLUNG EINER ZUSTANDSSTATISTIK EINES ENERGIESPEICHERS EINES ENERGIESPEICHERSYSTEM UND WERKZEUGMASCHINE**

(71) Anmelder: Hilti Aktiengesellschaft, 9494 Schaan (LI)
(72) Erfinder: Bokstaller, Jonas, 9470 Buchs (CH); Frenzel, Mathias, 86944 Unterdießen (DE); Kawetzki, Daniel, 9400 Rorschach (CH); Hauser, Klaus, 86830 Schwabmünchen (DE); Braun, Philipp, 77654 Offenburg (DE); Ziegler, Bernd, 86830 Schabmünchen (DE)
(74) Vertreter: Hilti Aktiengesellschaft Corporate Intellectual Property

(57) **Zusammenfassung**

Die Erfindung betrifft ein wiederaufladbares, tragbares **Energiespeichersystem (14)** zur Energieversorgung einer mobilen Werkzeugmaschine (10), umfassend einen wiederaufladbaren Energiespeicher (24), ein Energiemanagementsystem (26) zur Überwachung des Energiespeichers (24), wobei das Energiemanagementsystem (26) eingerichtet ist, eine Zustandsstatistik (48) zur Charakterisierung eines Zustands des Energiespeichers (24) zu ermitteln. Es ist dadurch gekennzeichnet, dass die Zustandsstatistik (48) von wenigstens einem Kennwert einer an das Energiespeichersystem (14) vorangehend angeschlossenen Werkzeugmaschine (10) und / oder von einem Nutzungskennwert der Werkzeugmaschine (10) abhängt. Des Weiteren betrifft die Erfindung ein Verfahren (1000) und eine mobile Werkzeugmaschine (10). Die Erfindung ermöglicht eine zuverlässige und leistungsfähige Energieversorgung der mobilen Werkzeugmaschine (10).

## Beschreibung

Die Erfindung geht aus von einem wiederaufladbaren, tragbaren Energiespeichersystem zur Energieversorgung einer mobilen Werkzeugmaschine aus einem Satz von mobilen Werkzeugmaschinen, umfassend einen wiederaufladbaren Energiespeicher, ein Energiemanagementsystem zur Steuerung und Überwachung des Energiespeichers, wobei das Energiemanagementsystem eingerichtet ist, eine Zustandsstatistik zur Charakterisierung eines Zustands des Energiespeichers zu ermitteln.

Die Zustandsstatistik kann sich beispielsweise auf einen Gesundheitszustand des Energiespeichers, englisch State of Health, abgekürzt SoH, beziehen. Der SoH entspricht einem Verhältnis einer aktuellen Kapazität des Energiespeichers zu einer nominellen Kapazität des Energiespeichers.

Bislang kann der SoH lediglich für Zeitpunkte zuverlässig ermittelt werden, zwischen denen der Energiespeicher einen vollständigen Lade-/Entladezyklus durchläuft. Insbesondere muss der Energiespeicher vollständig entladen und vollständig aufgeladen werden, um seine aktuelle Kapazität bestimmen zu können.

Moderne Steuerungsverfahren zum Entladen und Laden von Energiespeichern sehen jedoch häufig vor, derartige vollständige Entladungen oder Ladungen möglichst zu vermeiden, um die Lebensdauer des Energiespeichers zu verlängern.

Eine Aktualisierung des SoH ist somit nur selten möglich. Eine Überwachung des Zustands des Energiespeichersystems, insbesondere der Alterung oder im Hinblick auf die Erhöhung von Risiken wie beispielsweise einem drohenden thermischen Durchgehen, ist somit bislang nur sehr eingeschränkt möglich. Es müssen dadurch größere Sicherheitsmargen als eigentlich notwendig vorgesehen werden. Das Energiespeichersystem kann somit nicht bis an seine tatsächlichen Leistungsgrenzen genutzt werden. Werkzeugmaschinen, die durch ein solches Energiespeichersystem mit Energie versorgt werden, müssen leistungsschwächer ausgelegt sein. Arbeiten mit der Werkzeugmaschine müssen häufiger zum Laden des Energiespeichers unterbrochen werden als es theoretisch denkbar wäre.

Aufgabe der vorliegenden Erfindung ist es daher, eine leistungsfähige und sichere, kabellose Energieversorgung einer mobilen Werkzeugmaschine zu ermöglichen.

Gelöst wird die Aufgabe durch ein wiederaufladbares, tragbares **Energiespeichersystem** zur Energieversorgung einer mobilen Werkzeugmaschine, umfassend einen wiederaufladbaren Energiespeicher, ein Energiemanagementsystem zur Überwachung des Energiespeichers, wobei das Energiemanagementsystem eingerichtet ist, eine Zustandsstatistik zur Charakterisierung eines Zustands des Energiespeichers zu ermitteln, wobei die Zustandsstatistik von wenigstens einem Kennwert einer an das Energiespeichersystem vorangehend angeschlossenen Werkzeugmaschine und / oder von einem Nutzungskennwert der Werkzeugmaschine abhängt.

Ein der Erfindung zugrunde liegender Gedanke ist es somit, dass die Zustandsstatistik über den Energiespeicher präziser und / oder häufiger ermittelbar sein kann, wenn zur Ermittlung auch auf die Werkzeugmaschine bezogene Daten berücksichtigt werden. Durch eine präzisere und zeitlich höher aufgelöste Zustandsstatistik können wiederum Leistungsdaten der Werkzeugmaschine präziser gewählt, gesteuert und / oder eingestellt werden.

Je nach Art der Werkzeugmaschine und der Art und Weise ihrer Nutzung kann der sie mit Energie versorgende Energiespeicher unterschiedlich stark belastet werden. Dieser kann somit unterschiedlich schnell altern.

Mobile Werkzeugmaschinen können sich beispielsweise nach der Art und / oder Höhe der Leistungsaufnahme unterscheiden. Mobile Werkzeugmaschinen mit einer hohen Leistungsaufnahme, beispielsweise Werkzeugmaschinen mit einem Schlagwerk wie Hammerbohrmaschinen, Schlagschrauber oder dergleichen, beanspruchen den Energiespeicher unter Umständen stärker als Werkzeugmaschinen mit einer vergleichsweise gleichmäßigen, gegebenenfalls sogar im zeitlichen Mittel geringeren, Leistungsaufnahme wie beispielsweise Kreissägen, Schleifmaschinen oder dergleichen.

Mit einer Kenntnis solcher Daten kann somit die Zustandsstatistik präzise und auch für Zeitpunkte fortgeschrieben werden, für die keine Messwerte der Zustandsstatistik direkt verfügbar sind.

Mit Hilfe einer derart präziseren und / oder häufigeren Ermittlung der Zustandsstatistik kann der Energiespeicher und damit auch die Werkzeugmaschine näher bis an ihre tatsächlichen Leistungsgrenzen genutzt werden. Bei gleichem Materialaufwand kann somit der Energiespeicher und somit die an ihn angeschlossene Werkzeugmaschine mit höheren Leistungsdaten genutzt werden. Da die Zustandsstatistik präzise und zu vielen Zeitpunkten, insbesondere kontinuierlich oder zumindest quasi-kontinuierlich, ermittelt werden kann, ist auch eine lückenlose Überwachung des Energiespeichers möglich, sodass trotz höherer Leistungsdaten eine hohe Sicherheit gegeben ist.

Unter einer mobilen Werkzeugmaschine kann eine durch einen Benutzer und / oder autonom verlagerbare Werkzeugmaschine verstanden werden. Die mobile Werkzeugmaschine kann tragbar sein. Sie kann beispielsweise ein Gewicht von weniger als 43 kg, insbesondere von weniger als 25 kg aufweisen. Sie kann als Handwerkzeugmaschine ausgebildet sein. Denkbar ist alternativ auch, dass die Werkzeugmaschine als Bauroboter ausgebildet ist, der zur Fortbewegung eine mobile Plattform aufweist, beispielsweise ein Fahrwerk oder eine Flugplattform.

Der Energiespeicher kann Lithium-basiert sein. Denkbar ist auch, dass der Energiespeicher Natrium-basiert ist. Es kann sich auch um ein Redox-Flow-System handeln.

Das Energiespeichersystem kann eingerichtet sein, mit mehr als einem Typ, also beispielsweise Werkzeugmaschinen derselben Art, aber unterschiedlicher Leistungsklassen, und / oder mit mehr als einer Art, beispielsweise Bohrmaschinen, Schleifmaschinen, Trennmaschinen, etc., von Werkzeugmaschinen verwendet zu werden. Somit kann das Energiespeichersystem zunächst mit einer ersten Werkzeugmaschine einer ersten Art und anschließend mit einer zweiten Werkzeugmaschine eines zweiten Typs und / oder einer zweiten Art verwendet werden. Zur Ermittlung der Zustandsstatistik können dann Typ- und / oder Art-spezifische Schätzparameter verwendet werden. Die Schätzparameter können durch vorhergehende Untersuchungen an Werkzeugmaschinen desselben Typs bzw. derselben Art gewonnen worden sein.

Um die Kennwerte abfragen zu können, kann das Energiespeichersystem eine Datenschnittstelle zur Herstellung einer Datenübertragungsverbindung zur an das Energiespeichersystem aktuell oder vorangehend angeschlossenen Werkzeugmaschine aufweisen. Die Datenschnittstelle kann als Teil einer Energieübertragungsschnittstelle ausgebildet sein, über die für den Betrieb der Werkzeugmaschine erforderliche Leistung übertragbar ist bzw. übertragen wird. Die Datenschnittstelle kann auch als Teil einer Ladeschnittstelle ausgebildet sein, über die das Energiespeichersystem, insbesondere mit Hilfe eines Ladegeräts, aufgeladen wird bzw. aufladbar ist. Insbesondere kann die Ladeschnittstelle der Energieübertragungsschnittstelle entsprechen. Allgemein kann die Datenschnittstelle drahtgebunden sein. Sie kann alternativ oder ergänzend auch drahtlos sein. Beispielsweise kann es sich um eine sogenannte Bluetooth-, eine sogenannte WiFi-Verbindung, eine Mobilfunkverbindung oder dergleichen handeln.

Die Zustandsstatistik kann einen Gesundheitszustand, insbesondere einen SoH im Sinne eines Verhältnisses einer aktuellen Kapazität des Energiespeichers zu einer nominellen Kapazität des Energiespeichers, betreffen. Der Gesundheitszustand kann sich beispielsweise auf eine Restnutzungsdauer des Energiespeichers beziehen. Insbesondere der SoH kann Aussagen über eine Lebensdauer und / oder über alterungsbedingte Nutzungsmöglichkeiten oder Nutzungsbeschränkungen ermöglichen. Das Energiemanagementsystem kann den ermittelten SoH zur Steuerung des Lade- und / oder des Entladeverhaltens des Energiespeichers verwenden. Beispielsweise kann eine Nutzung des Energiespeichers gesperrt werden, wenn der SoH zu stark reduziert ist.

Denkbar ist alternativ auch, dass die Zustandsstatistik einen anderen Zustand des Energiespeichersystems erfasst. Beispielsweise kann die Zustandsstatistik einen Ladungszustand, engl. state of charge, abgekürzt SoC, betreffen. Der Ladungszustand kann beispielsweise der bis zur vollständigen Entladung des Energiespeichers verfügbare Restladung in Absolutwerten oder in Relativwerten, beispielsweise bezogen auf eine nominelle Kapazität des Energiespeichers, entsprechen.

Die Zustandsstatistik kann von wenigstens einem diskontinuierlich verfügbaren Messwert abhängen. Der diskontinuierlich verfügbare Messwert kann beispielsweise zur Kalibrierung eines Prognosemodells verwendet werden. Betrifft die Zustandsstatistik einen SoH, so kann der diskontinuierlich verfügbare Messwert beispielsweise eine aktuelle Kapazität des Energiespeichers betreffen. Die aktuelle Kapazität kann beispielsweise als Betrag des kumulierten Ladungsflusses beginnend an einem Zeitpunkt, in dem der Energiespeicher vollständig geladen ist, bis zu einem Zeitpunkt, in dem der Energiespeicher vollständig entladen ist, oder umgekehrt, gemessen werden. Die so ermittelte aktuelle Kapazität, im Folgenden als Extrempunktdifferenz-Kapazität, im Folgenden abgekürzt als EPD-Kapazität, bezeichnet, ist somit lediglich zu Zeitpunkten, an denen der Energiespeicher vollständig entladen oder vollständig aufgeladen ist, und somit diskontinuierlich verfügbar.

Der Kennwert und / oder der Nutzungskennwert kann eine Art, eine minimale Leistung, eine maximale Leistung, einen minimalen Strom, einen maximalen Strom, einen Verlaufskennwert, einen Zeitpunkt, eine Zeitdauer und / oder eine Temperatur der Werkzeugmaschine und / oder eine Umgebungstemperatur betreffen. Es hat sich in eigenen Untersuchungen gezeigt, dass die genannten Parameter einen besonderen prognostischen Wert zur Extrapolation des SoH, beispielsweise ausgehend von einem Zeitpunkt, an dem die Extrempunktdifferenz-Kapazität bekannt ist, beitragen können. Der Verlaufskennwert kann einen Verlauf eines Nutzungsverhalten eines Nutzers oder einer Nutzergruppe und damit eines Betriebsverlaufs der Werkzeugmaschine und / oder einen Verlauf eines elektrischen Messwerts der Werkzeugmaschine betreffen. Denkbar ist auch, die genannten Daten in aggregierter Form zu verwenden. Beispielsweise ist denkbar, insbesondere als Anfangswerte, wenn noch keine oder noch keine ausreichenden Daten zu einem Nutzer oder einer mobilen Werkzeugmaschine verfügbar sind, regionale, Art- und / oder Typ-spezifische Durchschnittswerte zur Prognose zu verwenden. Dann können Prognosen bereits von Anfang an erfolgen; es braucht nicht abgewartet zu werden, bis ausreichend individuelle Daten gesammelt sind.

Zusammenhänge zwischen derartigen Kennwerten und / oder Nutzungskennwerten und Zustandsstatistiken wie beispielsweise dem SoH sind in der Regel nichtlinear. Allerdings können umfangreiche Trainingsdaten verhältnismäßig einfach gewonnen werden. Beispielsweise können Trainingsdaten während der Nutzung von mobilen Werkzeugmaschinen durch mehrere Nutzer in deren üblichen Alltag zeitlich parallel gesammelt werden. Daher bietet es sich an, wenn das Energiemanagementsystem einen Maschinenlerner aufweist. Dann kann das Energiemanagementsystem eingerichtet sein, die Zustandsstatistik mit Hilfe des Maschinenlerners zu ermitteln. Der Maschinenlerner kann ein neuronales Netzwerk mit ein oder mehreren Schichten umfassen. Es kann beispielsweise eine LSTM (engl. Long Short Term Memory) - Struktur aufweisen. Eine noch bessere prädiktive Validität hat sich ferner bei Gradient Boosted Tree Modellen ergeben.

Der Maschinenlerner kann selbstlernend ausgebildet sein. Insbesondere kann das Energiemanagementsystem eingerichtet sein, Netzwerkparameter des Maschinenlerners laufend oder in regelmäßigen Abständen oder in Abhängigkeit von bestimmten Ereignissen zu aktualisieren. Somit kann die prognostische Validität des Maschinenlerners kontinuierlich optimiert werden.

Das Energiespeichersystem kann eine Kommunikationsschnittstelle zur direkten oder indirekten Datenübertragung mit einem Ladegerät und / oder einem entfernten Rechnersystem aufweisen. Dann können Daten, beispielsweise Kennwerte, Nutzungskennwerte, Daten des Energiespeichers oder Netzwerkparameter, vom Energiespeichersystem zu dem entfernten Rechnersystem, entweder direkt oder indirekt beispielsweise zunächst zum Ladegerät und von dort zu dem entfernten Rechnersystem, übertragen werden. Ebenso ist denkbar, in der umgekehrten Richtung, beispielsweise von einem entfernten Rechnersystem zum Energiespeichersystem Daten, beispielsweise Netzwerkparameter, Steuerparameter zur Steuerung des Lade- und / oder Entladeverhaltens des Energiespeichersystems, oder dergleichen zu übertragen. So lässt sich das Energiemanagementsystem aus der Ferne modifizieren.

Das Energiespeichersystem kann ein Gehäuse aufweisen. Innerhalb des Gehäuses kann sich der Energiespeicher befinden. Das Energiemanagementsystem kann sich auch innerhalb des Gehäuses befinden. Denkbar ist allerdings auch, dass sich zumindest ein Teil des Energiemanagementsystems außerhalb des Gehäuses befindet. Insbesondere kann ein lokaler Teil des Energiemanagementsystems sich im Gehäuse befinden und ein nichtlokaler Teil außerhalb des Gehäuses. Der nichtlokale Teil kann beispielsweise mit Hilfe des entfernten Rechnersystems implementiert sein. Das entfernte Rechnersystem kann Cloud-basiert sein. In der Cloud können Trainingsdaten und / oder Netzparameter gespeichert und / oder modifiziert, beispielsweise trainiert, werden. Die Trainingsdaten können von mehr als einem Energiespeichersystem stammen. Die Trainingsdaten und / oder die Netzparameter können dann auf den lokalen Teil des Energiemanagementsystems übertragen werden.

Energie zur Datenübertragung kann eingespart werden, wenn die Datenübertragung diskontinuierlich, beispielsweise sobald das Energiespeichersystem an das Ladegerät angeschlossen wird, erfolgt. Dementsprechend ist denkbar, dass die Kommunikationsschnittstelle diskontinuierlich arbeitend ausgebildet ist.

Die Ermittlung der Zustandsstatistik kann im lokalen Teil und / oder im nichtlokalen Teil des Energiemanagementsystems erfolgen. Wird sie zumindest teilweise im nichtlokalen Teil ermittelt, so können hierzu auch Daten weiterer Energiespeichersysteme in die Ermittlung der Zustandsstatistik des Energiespeichersystems herangezogen werden.

So können Erkenntnisse, die bei Nutzung mehrerer der Energiespeichersysteme gewonnen werden, zur fortlaufenden Verbesserung der Ermittlung der Zustandsstatistiken der einzelnen Energiespeichersysteme genutzt werden.

Daher ist es vorteilhaft, wenn das Energiemanagementsystem eingerichtet ist, die Zustandsstatistik in Abhängigkeit von wenigstens einem weiteren Energiespeichersystem der vorangehend beschriebenen Art zu ermitteln.

In den Rahmen der Erfindung fällt des Weiteren eine **mobile Werkzeugmaschine,** beispielsweise Bohrmaschine, Direktsetzgerät, Schraubmaschine, Trennmaschine, Schleifmaschine, mit einer werkzeugmaschinenseitigen Datenschnittstelle und einem Energiespeichersystem der vorangehend beschriebenen Art, wobei die werkzeugmaschinenseitige Datenschnittstelle komplementär zur Datenschnittstelle des Energiespeichersystems ausgebildet ist.

Des Weiteren betrifft die Erfindung auch ein **Verfahren** zur Ermittlung einer Zustandsstatistik eines wiederaufladbaren, tragbaren Energiespeichersystem zur Energieversorgung einer mobilen Werkzeugmaschine, wobei die mobile Werkzeugmaschine einen wiederaufladbaren Energiespeicher und ein Energiemanagementsystem zur Steuerung und Überwachung des Energiespeichers umfasst, wobei das Energiemanagementsystem eingerichtet ist, eine Zustandsstatistik zur Charakterisierung eines Zustands des Energiespeichers zu ermitteln, wobei die Zustandsstatistik in Abhängigkeit von wenigstens einem Kennwert einer an das Energiespeichersystem vorangehend angeschlossenen Werkzeugmaschine und / oder von einem Nutzungskennwert der Werkzeugmaschine ermittelt wird.

Mit analogen Begründungen wie vorangehend für das Energiespeichersystem geschildert, weisen auch die Werkzeugmaschine und das Verfahren die entsprechenden Vorzüge auf und lösen somit ebenfalls die Aufgabe in besonders vorteilhafter Weise.

Eine weitere Zusatzfunktionalität lässt sich auf einfache Weise erreichen, wenn auch für Zeitpunkte, an denen ein diskontinuierlicher Messwert vorliegt, die Zustandsstatistik zusätzlich unter Verwendung des Maschinenlerners ermittelt werden. So können die auf unterschiedlichen Wege ermittelten Werte der Zustandsstatistik miteinander verglichen werden. Überschreitet ein Unterschied zwischen beiden einen bestimmten Grenzwert, kann dies beispielsweise auf eine Fehlfunktion eines Sensors hinweisen. Derartige Fehlfunktionen können beispielsweise nach Stürzen des Energiespeichersystems oder bei Überlastungen oder dergleichen auftreten. Der Grenzwert kann auch dynamisch definiert sein. Beispielsweise kann er von einer Anzahl von Tagen seit einer vorherigen Messung oder Kalibrierung des Maschinenlerners abhängen.

Insbesondere wenn die ermittelte Nutzungsstatistik einem Gesundheitszustand des Energiespeichers entspricht, ist denkbar, aus einem zeitlichen Verlauf ermittelter Nutzungsstatistiken auf einen zu erwartenden Zeitpunkt zu extrapolieren, an dem eine nächste Wartung und / oder ein Austausch des Energiespeichersystems erfolgen sollte. Somit lassen sich Arbeitsunterbrechungen durch Funktionsausfälle des Energiespeichersystems vermeiden.

Eine weitere Möglichkeit ergibt sich, wenn aus derartigen ermittelten zeitlichen Verläufen für Arten von mobilen Werkzeugmaschinen und / oder für bestimmte Nutzer oder Nutzergruppen der mobile Werkzeugmaschinen Nutzungsprofile ermittelt werden. Dann lassen sich individuelle, optimierte Wartungs- und / oder Austauschintervalle ableiten, durch die die Produktivität der Nutzer beziehungsweise der von ihnen verwendeten mobilen Werkzeugmaschinen weiter gesteigert werden kann.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- Fig. 1: eine mobile Werkzeugmaschine mit einem Energiespeichersystem,
- Fig. 2: ein Flussdiagramm eines Verfahrens zur Ermittlung einer Zustandsstatistik,
- Fig. 3: ein Ladezustandsdiagramm,
- Fig. 4: einen vergrößerten Ausschnitt des Ladezustandsdiagramms gemäß Fig. 3 und
- Fig. 5: einen vergrößerten Ausschnitt eines weiteren Ladezustandsdiagramms.

In der nachfolgenden Beschreibung der Figuren werden zur Erleichterung des Verständnisses der Erfindung für gleiche oder sich funktional entsprechende Elemente jeweils die gleichen Bezugszeichen verwendet.

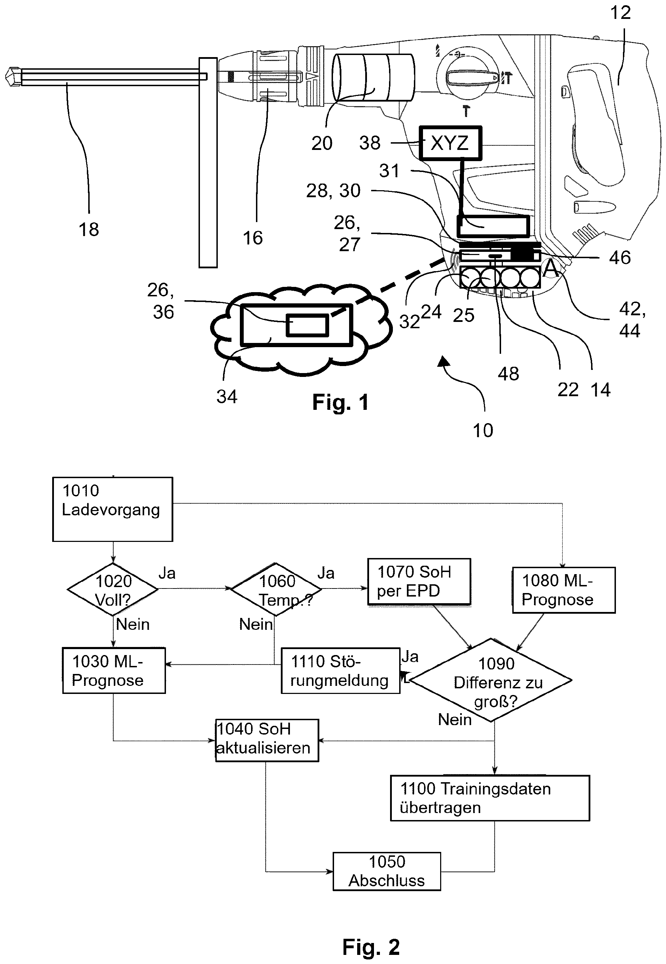

**Fig. 1** zeigt eine mobile Werkzeugmaschine **10.** Die mobile Werkzeugmaschine 10 ist in diesem Ausführungsbeispiel als Bohrhammermaschine ausgebildet. Sie ist als tragbares Gerät ausgebildet und weist dazu einen Griffabschnitt **12** auf.

Die mobile Werkzeugmaschine 10 ist kabellos betreibbar. Zur kabellosen Energieversorgung weist sie ein Energiespeichersystem **14** in Form eines wiederaufladbaren Batteriesystems auf.

Die mobile Werkzeugmaschine 10 weist ferner eine Werkzeugaufnahme **16** auf. In diese ist ein Werkzeug **18** aufgenommen.

Die mobile Werkzeugmaschine 10 weist weiter ein, in Fig. 1 lediglich schematisch dargestelltes, elektropneumatisches Schlagwerk **20** auf. Das elektropneumatisches Schlagwerk 20 treibt die Werkzeugaufnahme 16 und damit das Werkzeug 18 wahlweise drehend, schlagend oder drehschlagend an.

In Fig. 1 sind Komponenten des Energiespeichersystem 14 schematisch dargestellt. In einem Gehäuse **22** befinden sich ein Energiespeicher **24** mit ein oder mehreren Speicherzellen **25,** von denen aus Vereinfachungsgründen lediglich in Fig. 1 eine mit einem Bezugszeichen versehen ist. Die Speicherzellen 25 können beispielsweise Lithium-basierte Einzelzellen, beispielsweise des Typs 18650 oder in Form von Pouchzellen, sein. Lade- und Entladevorgänge der Speicherzellen 25 werden durch ein Energiemanagementsystem **26** überwacht und gesteuert. Dazu befindet sich im Gehäuse 22 ein lokaler Teil **27** des Energiemanagementsystems 26. Der lokale Teil 27 ist dazu einerseits mit dem Energiespeicher 24 und andererseits mit einer Ladeschnittstelle **28** verbunden.

Die Ladeschnittstelle 28 ist eingerichtet, elektrische Energie bidirektional zu übertragen, insbesondere zur Energieversorgung der übrigen mobilen Werkzeugmaschine 10 abzugeben und zur Aufladung des Energiespeichers 24, beispielsweise von einem Ladegerät, aufzunehmen. Die Ladeschnittstelle 28 ist ferner zur Datenkommunikation eingerichtet. Sie bildet somit auch eine Datenschnittstelle **30,** über die das Energiemanagementsystem 26, insbesondere der lokale Teil 27, Daten mit der übrigen mobilen Werkzeugmaschine 10 über eine werkzeugmaschinenseitige Datenschnittstelle **31** austauschen kann.

Der lokale Teil 27 ist ferner mit einer Kommunikationsschnittstelle **32** verbunden. Die Kommunikationsschnittstelle 32 kann beispielsweise eine Funkdatenschnittstelle, beispielsweise gemäß einem WLAN-Standard oder einem üblicherweise als "Bluetooth" bezeichneten Standard folgend, sein.

Die Kommunikationsschnittstelle 32 ist eingerichtet, direkt und / oder indirekt, insbesondere mittels Internet, eine temporäre oder dauerhafte Datenverbindung zu einem Cloud-basierten Rechnersystem **34** aufzubauen. Das Cloud-basierte Rechnersystem 34 umfasst einen nichtlokalen Teil **36** des Energiemanagementsystems 26.

Denkbar ist auch, dass die Kommunikationsschnittstelle 32 in die Datenschnittstelle 30 integriert und / oder durch diese ausgebildet ist. Dann ist beispielsweise denkbar, dass, sobald das Energiespeichersystem 14 mit einem Ladegerät (in Fig. 1 nicht abgebildet) verbunden ist und das Ladegerät wiederum eine Verbindung mit dem Internet aufweist, jeweils Daten zwischen dem lokalen Teil 27 und dem nichtlokalen Teil 36 auszutauschen. Denkbar ist somit, dass die Datenschnittstelle 30 sowohl mit der werkzeugmaschinenseitigen Datenschnittstelle 31 Daten austauschen kann, wenn diese an die übrige Werkzeugmaschine 10 angeschlossen ist. Sie kann ferner eingerichtet sein, mit anderen Geräten, insbesondere dem Cloud-basierten Rechnersystem 34 Daten austauschen, wenn sie beispielsweise an ein anderes Gerät, beispielsweise das Ladegerät, angeschlossen ist.

Die mobile Werkzeugmaschine 10 weist weiter einen Kennwertespeicher **38** auf, in dem Kennwerte der mobilen Werkzeugmaschine 10 gespeichert sein können. Beispielsweise kann eine Art der mobilen Werkzeugmaschine 10, im Ausführungsbeispiel also Bohrhammermaschine, in diesem hinterlegt sein. Daten des Kennwertespeichers 38 können über die werkzeugmaschinenseitige Datenschnittstelle 31 bei montiertem Energiespeichersystem 14 an die Datenschnittstelle 30 übertragen werden, sodass das Energiemanagementsystem 26 beispielsweise die Art der angeschlossenen mobilen Werkzeugmaschine 10 ermitteln kann.

Zur Ermittlung weiterer Kennwerte und / oder Nutzungskennwerte der mobilen Werkzeugmaschine 10 weist das Energiespeichersystem 14 einen oder mehrere Sensoren **42** auf, beispielsweise einen Stromsensor **44** zur zeitlich aufgelösten Messung der von der mobilen Werkzeugmaschine 10 aus dem Energiespeicher 24 bezogenen Stromstärke.

Der lokale Teil 27 des Energiemanagementsystems 26 ist auf einem Mikrocontroller implementiert. Insbesondere weist das Energiemanagementsystem 26 einen Maschinenlerner **46** auf, auf dem ein Gradient Boosted Tree-Modell implementiert ist. Der Maschinenlerner 46 kann vom nichtlokalen Teil 36 Netzparameter zur Aktualisierung seines Verhaltens erhalten. Der Maschinenlerner 46 ist eingerichtet, aus Daten des Energiespeichers 24 sowie aus Kennwerten und Nutzungskennwerten der mobilen Werkzeugmaschine 10, beispielsweise unter anderem auf Basis der Daten des Kennwertespeichers 38, einen SoH als Zustandsstatistik **48** zu ermitteln. Die Zustandsstatistik kann beispielsweise in Form von Prozentwerten einer nominellen Maximalkapazität ausgedrückt sein. Sie kann als Einzelwert und / oder als zeitlicher Verlauf ermittelt werden bzw. vorliegen. Das Energiemanagementsystem 26 ist eingerichtet, Lade- und Entladevorgänge mit Hilfe der Zustandsstatistik 48 zu steuern. Ferner ist es vorzugsweise auch eingerichtet, die jeweils ermittelten Werte der Zustandsstatistik 48 an das Cloud-basierte Rechnersystem 34 zu übertragen. Dort können vorzugsweise Werte der Zustandsstatistik 48 von weiteren Geräte wie beispielsweise Smartphones oder anderen Rechnersysteme abrufbar sein.

**Fig. 2** stellt ein Flussdiagramm eines Verfahrens **1000** zur Ermittlung der Zustandsstatistik 48 des Energiespeichersystems 14, im vorliegenden Beispiel eines SoH, dar. Zur Beschreibung des Verfahrens 1000 wird zur Vereinfachung des Verständnisses auf die vorangehend eingeführten Bezugszeichen Bezug genommen.

Die Zustandsstatistik 48 wird gemäß dem Verfahren 1000 wie folgt in Abhängigkeit von wenigstens einem Kennwert, hier beispielsweise abhängig von der Art der Werkzeugmaschine sowie von bezogenen Stromstärken, der vorangehend angeschlossenen Werkzeugmaschine 10 ermittelt:
Vorausgesetzt ist, dass der Maschinenlerner 46 bereits mit zumindest grob angepassten Netzparametern kalibriert ist. Weiter vorausgesetzt ist, dass der Energiespeicher 24 zumindest einmalig zuvor vollständig entleert war, sodass der kumulierte Ladestrom während eines Ladevorganges **1010** in Verbindung mit den kumulierten Entladeströmen seit der letztmaligen vollständigen Entleerung des Energiespeichers 24 der aktuellen Ladungsmenge des Energiespeichers 24, gegebenenfalls korrigiert um etwaige Eigenverlustströme oder sonstiger Ladestromverluste, entspricht.

Das eigentliche Verfahren 1000 startet beispielsweise nach Abschluss des Ladevorganges 1010. Ist gemäss einer Prüfung **1020** der Energiespeicher 24 noch nicht vollständig aufgeladen, so wird die Zustandsstatistik 48 mit Hilfe des Maschinenlerners 46 in einer Prognosephase **1030** ermittelt. Mit den Ergebnissen kann die Zustandsstatistik 48, hier der SoH, in einer Aktualisierungsphase 1040 aktualisiert werden. Das Verfahren kann dann an einem Abschluss **1050** beendet werden. Denkbar ist auch, dass im Rahmen des Abschluss 1050 die aktualisierte Zustandsstatistik 48 ausgegeben und / oder weiterverarbeitet wird. Beispielsweise kann die aktualisierte Zustandsstatistik 48 an das Cloud-basierte Rechnersystem 34 übertragen werden.

Im Falle, dass nach dem Ladevorgang 1010 der Energiespeicher 24 vollständig aufgeladen ist, kann der Maschinenlerner 46 rekalibriert werden, sofern eine EPD-Kapazität ermittelbar ist. Dazu wird zunächst in einer Prüfung **1060** zunächst geprüft, ob der Aufladevorgang innerhalb eines zulässigen Temperaturbereichs erfolgte und ob sich der Energiespeicher 24 in einem zur Bestimmung der EPD-Kapazität geeigneten Temperaturbereich befindet. In einer EPD-Phase 1070 wird dann aus der zur vollständigen Aufladung des Energiespeichers 24 benötigten Ladungsmenge die EPD-Kapazität berechnet. Zusätzlich wird in einer Prognosephase **1080** mit Hilfe des Maschinenlerners 46 wiederum ein Wert für die Kapazität des Energiespeichers 24 prognostiziert. Ergibt sich in einem Vergleich **1090** jedoch, dass die ermittelte EPD-Kapazität zu stark von der mittels Maschinenlerner 46 prognostizierten Kapazität abweicht, insbesondere deren Differenz einen bestimmten Grenzwert überschreitet, wird dies als Fehlfunktion des Energiemanagementsystem 26 und / oder wenigstens eines der Sensoren 42 interpretiert. Es kann in diesem Fall eine Störungsmeldung 1100, beispielsweise an das entfernte Rechnersystem 34, erfolgen und / oder das Energiespeichersystem 14 wird - insbesondere aus Sicherheitsgründen - in seinem Leistungsvermögen beschränkt.

Falls kein geeigneter Temperaturbereich bei der Prüfung 1060 vorliegt oder falls die Differenz den Grenzwert überschreitet, wird zur oben bereits beschriebenen Prognosephase 1030 gewechselt, sodass wiederum die Zustandsstatistik 46 mit Hilfe des Maschinenlerners 46 aktualisiert wird.

Falls die Differenz den Grenzwert nicht überschreitet, kann das neu gewonnene Paar aus EPD-Kapazität und der mittels Maschinenlerner 46 prognostizierten Kapazität als zusätzlicher Trainingsdatensatz, gegebenenfalls mit weiteren Daten wie beispielsweise der ermittelten Art der mobilen Werkzeugmaschine, in einer Übertragungsphase **1100** beispielsweise zum entfernten Rechnersystem 34, insbesondere zum nichtlokalen Teil 36, übertragen werden, um Netzparameter mit diesen zusätzlichen Trainingsdaten weiter zu verbessern und die verbesserten Netzparameter wieder zurück zum Maschinenlerner 46 zu übertragen.

Eigenen Versuche wurden mit einem Energiespeichersystem 14 durchgeführt, bei dem der Datenaustausch zwischen dem lokalen Teil 27 und dem entfernten Rechnersystem 34 über die Datenschnittstelle 30 und über daran angeschlossene Ladegeräte erfolgte. Somit konnten Daten nur zu unregelmäßigen Zeitpunkten und damit diskontinuierlich übertragen werden.

Zwischen jeweils zwei aufeinanderfolgenden Ladevorgängen wurden Kennwerte und Nutzungskennwerte durch das Energiemanagementsystem 26 gesammelt. Neben den Arten der angeschlossenen mobilen Werkzeugmaschinen 10 wurden insbesondere je Art der Werkzeugmaschine Zeitdauern aufgezeichnet, wie lange die jeweiligen Werkzeugmaschinenklassen wieviel Strom, aufgeteilt in etwa 5 bis 10 Stärkeklassen, und damit welche Leistungen bezogen. Denkbar ist, dass auf dem Cloud-basierten Rechnersystem 34 Trainingsdaten mehrerer der Energiemanagementsysteme 26 aggregiert werden, um besonders zuverlässige Trainingsdatensätze zu erhalten.

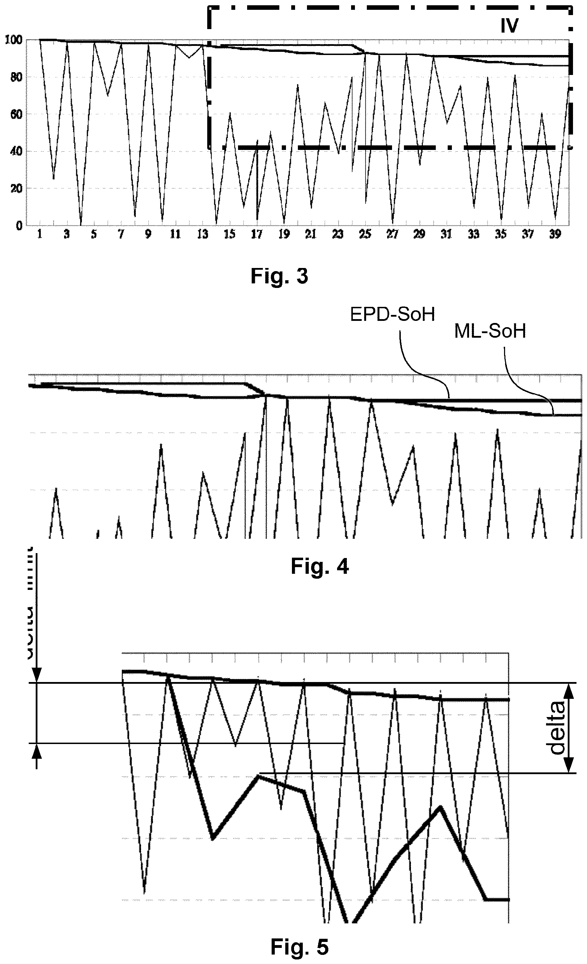

**Fig. 3** zeigt eine Ladestandskurve, auf der Ladezustände in Prozent einer nominellen Kapazität gegen die Zeit in standardisierten Einheiten abgetragen ist.

**Fig. 4** zeigt einen Ausschnitt **IV** (siehe Fig. 3) der Ladestandskurve. Zu erkennen ist, dass die EPD-Kapazität, aufgetragen als Kurve **EPD-SoH** und damit der zu Zeitpunkten des Vollladens in Verbindung mit Zeitpunkten einer vollständigen Entleerung lediglich selten verändert. Demgegenüber ermöglicht die Kombination der EPD-basierten mit der Maschinenlerner-basierten Ermittlung entsprechend dem Verfahren 1000, aufgetragen als Kurve **ML-SoH** eine kontinuierliche Schätzung des SoH.

**Fig. 5** zeigt in einem Ausschnitt einer weiteren Ladestandskurve einen Sonderfall, bei dem zu einem gewissen Zeitpunkt der mittels Maschinenlerner 46 ermittelte SoH zu stark von dem per EPD-Kapazität ermittelten SoH abweicht. Insbesondere zeigt sich während des Vergleichs 1090 eine Differenz **delta,** die erkennbar größer als ein vordefinierter Grenzwert **delta_limit** ist. Dies kann als potenzielle Fehlfunktion klassifiziert werden und die Störungsmeldung 1100 kann ausgelöst werden.

### Bezugszeichenliste

- 10: Werkzeugmaschine
- 12: Griffabschnitt
- 14: Energiespeichersystem
- 16: Werkzeugaufnahme
- 18: Werkzeug
- 20: Schlagwerk
- 22: Gehäuse
- 24: Energiespeicher
- 25: Speicherzelle
- 26: Energiemanagementsystem
- 27: lokaler Teil
- 28: Ladeschnittstelle
- 30: Datenschnittstelle
- 31: Datenschnittstelle
- 32: Kommunikationsschnittstelle
- 34: Rechnersystem
- 36: nichtlokaler Teil
- 38: Kennwertespeicher
- 42: Sensor
- 44: Stromsensor
- 46: Maschinenlerner
- 48: Zustandsstatistik
- 1000: Verfahren
- 1010: Ladevorgang
- 1020: Prüfung
- 1030: Prognosephase
- 1040: Aktualisierungsphase
- 1050: Abschluss
- 1060: Prüfung
- 1070: EPD-Phase
- 1080: Prognosephase
- 1090: Vergleich
- 1100: Übertragungsphase
- EPD-SoH: Kurve
- ML-SoH: Kurve
- IV: Ausschnitt
- delta: Differenz
- delta_limit: Grenzwert
Ende Bezugszeichenliste

## Patentansprüche

1. Wiederaufladbares, tragbares **Energiespeichersystem (14)** zur Energieversorgung einer mobilen Werkzeugmaschine (10), umfassend einen wiederaufladbaren Energiespeicher (24), ein Energiemanagementsystem (26) zur Überwachung des Energiespeichers (24), wobei das Energiemanagementsystem (26) eingerichtet ist, eine Zustandsstatistik (48) zur Charakterisierung eines Zustands des Energiespeichers (24) zu ermitteln,
**dadurch gekennzeichnet,**
**dass** die Zustandsstatistik (48) von wenigstens einem Kennwert einer an das Energiespeichersystem (14) vorangehend angeschlossenen Werkzeugmaschine (10) und / oder von einem Nutzungskennwert der Werkzeugmaschine (10) abhängt.

2. Energiespeichersystem (14) nach dem vorhergehenden Anspruch, **dadurch gekennzeichnet, dass** das Energiespeichersystem (14) eine Datenschnittstelle (30) zur Herstellung einer Datenübertragungsverbindung zur an das Energiespeichersystem (14) aktuell oder vorangehend angeschlossenen Werkzeugmaschine (10) aufweist.

3. Energiespeichersystem (14) nach einem der vorhergehenden Ansprüche, **dadurch gekennzeichnet, dass** die Zustandsstatistik (48) einen Gesundheitszustand, insbesondere einen SoH im Sinne eines Verhältnisses einer aktuellen Kapazität des Energiespeichers (24) zu einer nominellen Kapazität des Energiespeichers (24), betrifft.

4. Energiespeichersystem (14) nach einem der vorhergehenden Ansprüche, **dadurch gekennzeichnet, dass** die Zustandsstatistik (48) von wenigstens einem diskontinuierlich verfügbaren Messwert abhängt.

5. Energiespeichersystem (14) nach einem der vorhergehenden Ansprüche, **dadurch gekennzeichnet, dass** der Kennwert und / oder der Nutzungskennwert eine Art, eine minimale Leistung, eine maximale Leistung, einen minimalen Strom, einen maximalen Strom, einen Verlaufskennwert, einen Zeitpunkt, eine Zeitdauer und / oder eine Temperatur der Werkzeugmaschine (10) und / oder eine Umgebungstemperatur betreffen.

6. Energiespeichersystem (14) nach einem der vorhergehenden Ansprüche, **dadurch gekennzeichnet, dass** das Energiemanagementsystem (26) einen Maschinenlerner (46) aufweist.

7. Energiespeichersystem (14) nach einem der vorhergehenden Ansprüche, **dadurch gekennzeichnet, dass** das Energiespeichersystem (14) eine Kommunikationsschnittstelle (32) zur direkten oder indirekten Datenübertragung mit einem Ladegerät und / oder einem entfernten Rechnersystem (34) aufweist.

8. Energiespeichersystem (14) nach einem der vorhergehenden Ansprüche, **dadurch gekennzeichnet, dass** die Kommunikationsschnittstelle (32) diskontinuierlich arbeitend ausgebildet ist.

9. Energiespeicher (24) nach einem der vorherigen Ansprüche, **dadurch gekennzeichnet, dass** das Energiemanagementsystem (26) eingerichtet ist, die Zustandsstatistik (48) in Abhängigkeit von wenigstens einem weiteren Energiespeichersystem (14) nach einem der vorhergehenden Ansprüche zu ermitteln.

10. **Mobile Werkzeugmaschine (10),** beispielsweise Bohrmaschine, Direktsetzgerät, Schraubmaschine, Trennmaschine, Schleifmaschine, mit einer werkzeugmaschinenseitigen Datenschnittstelle (30) und einem Energiespeichersystem (14) nach einem der vorhergehenden Ansprüche, wobei die werkzeugmaschinenseitige Datenschnittstelle (30) komplementär zur Datenschnittstelle (30) des Energiespeichersystems ausgebildet ist.

11. **Verfahren (1000)** zur Ermittlung einer Zustandsstatistik (48) eines wiederaufladbaren, tragbaren Energiespeichersystem (14) zur Energieversorgung einer mobilen Werkzeugmaschine (10), wobei die mobilen Werkzeugmaschine (10) einen wiederaufladbaren Energiespeicher (24) und ein Energiemanagementsystem (26) zur Steuerung und Überwachung des Energiespeichers (24) umfasst, wobei das Energiemanagementsystem (26) eingerichtet ist, eine Zustandsstatistik (48) zur Charakterisierung eines Zustands des Energiespeichers (24) zu ermitteln,
**dadurch gekennzeichnet,**
**dass** die Zustandsstatistik (48) in Abhängigkeit von wenigstens einem Kennwert einer an das Energiespeichersystem (14) vorangehend angeschlossenen Werkzeugmaschine (10) und / oder von einem Nutzungskennwert der Werkzeugmaschine (10) ermittelt wird.
